# EUROPEAN PATENT SPECIFICATION

(11) **EP 2 497 993 B1**
(45) Date of publication and mention of the grant of the patent: **30.07.2014**
(21) Application number: 12158696.0
(22) Date of filing: 09.03.2012
(51) Int. Cl.: F16M 13/02, A47B 95/00

(54) **Cabinet structure assembly**
Gehäusestrukturbaugruppe
Ensemble de structure d'armoire

(30) Priority: 11.03.2011 JP 2011054801
(43) Date of publication of application: 12.09.2012
(73) Proprietor: Funai Electric Co., Ltd., Nakagaito Daito-shi Osaka 574-0013 (JP)
(72) Inventor: Fukumoto, Yasuyuki, Osaka, 574-0013 (JP)
(74) Representative: Grünecker, Kinkeldey, Stockmair & Schwanhäusser

(56) References cited:
- EP-A1- 1 720 344
- JP-A- 2008 180 318
- TW-U- M 397 115
- US-A1- 2005 174 726
- US-A1- 2007 211 417
- US-A1- 2010 090 569

## Description

### Field of the Invention

The present invention generally relates to a cabinet structure assembly. More specifically, the present invention relates to a cabinet structure assembly for attaching an attachment member to a cabinet.

### Background Information

With conventional image display devices, a variety of wall brackets have been proposed. The wall brackets are mounted to an interior wall or the like, and are attached to a cabinet of the image display device. A conventional wall mounting structure for relatively heavy electronic devices has an L-shaped latching piece. The L-shaped latching piece is provided to a wall mounting base that is attached to a rear face of an electronic device. The L-shaped latching piece is engaged with a guide hole of a wall bracket that is fixed to a wall (see Japanese Laid-Open Patent Application Publication No. 2002-158456, for example). With another conventional wall mounting structure, an attachment bracket fixed to a wall has a hook. A rear face of a housing that contains electronic parts has a hook latching component. The hook is fitted to the hook latching component (see Japanese Utility Model Registration No. 3,044,576, for example). With further another conventional wall mounting structure, a housing of an electronic device is attached to an attachment rail with a housing fixing apparatus (see Japanese Laid-Open Patent Application Publication No. 2001-284837, for example).

These conventional wall mounting structures are related to a constitution for attaching a housing of an electronic device to a wall bracket, a hook, or the like that is fixed to an interior wall or the like. However, these conventional wall mounting structure do not pertain to a structure for attaching an attachment member attached to a wall bracket to a cabinet of a flat-screen television set or the like.

Meanwhile, another type of conventional structure employs a sheet metal attachment member with a threaded hole. The attachment member is mounted to a cabinet of an image display device in order to attach the cabinet to a wall bracket fixed to an interior wall or the like.

Specifically, one conventional structure of this type has an attachment member (e.g., a wall mount bracket). The attachment member is made of sheet metal and formed in a crank shape in side view. The attachment member is fastened with an attachment screw to a cabinet. Specitically, the attachment member is disposed on an inside of a plastic rear cabinet of a tlat-screen television set. The attachment member has a threaded hole. The threaded hole faces an opening on the rear cabinet.

Another conventional structure for this type has a support frame and an attachment member. The support frame is formed in a square tube shape, and is made of plastic. The support frame is integrally formed on an inside of a cabinet. Specifically, the support frame is formed on a plastic rear cabinet of a flat-screen television set. The attachment member is made of sheet metal. The attachment member is press-titted into the support frame. The support frame is then covered with a plastic box-shaped cover such that an opening in the support frame is covered by this box-shaped cover. With this conventional structure, the attachment member further has a threaded hole that faces an opening of the rear cabinet. The rear cabinet further has an engagement hook for fixing the box-shaped cover.

Document US 2010/0090569 A1 discloses a cabinet structure ,assembly with a cabinet including a wall with an inner face, an attachment member, as well as an attachment frame. The attachment frame is disposed on the inner face of the cabinet and includes a side wall portion that protrudes from the inner face of the cabinet. The attachment member is detachably disposed within the attachment frame and comprises a base plate with a threaded hole that is aligned with a through hole of the inner face of the cabinet. The attachment frame comprises two latching pieces in order to keep the attachment member inside the attachment frame.

Additionally, the Taiwanese publication TW M 397 115 U1 discloses a fixing mechanism for fixing a display casing whereon a hole is formed, a shielding wall connected to a side of the display casing, and a bracket welded inside the shielding wall in a detachable manner and installed on the side of the display housing.

### SUMMARY

It has been discovered that, with the above-mentioned conventional structures, the work entailed by screwing the attachment member to the rear cabinet is time-consuming. In particular, when the attachment members are mounted at a plurality of places (such as four places) on the rear cabinet, screws need to be fastened at each of these places, which makes the assembly work much more difficult. Also, television sets have increasingly been moving toward flat-screen style of late. Thus, there is a trend in which an attachment position of the attachment member is closer to a wiring board that is essential to the control of the television set. Because of this, a large prohibited region in which there is no control circuit on the wiring board must be ensured in order to ensure adequate spacing between the attachment member and the control circuit formed on the wiring board, to meet ESD testing (electrostatic damage testing) requircments, and so forth. This is disadvantageous to board design.

On the other hand, with the above-mentioned conventional structure having the box-shaped cover, the attachment member inserted into the plastic support frame is covered by the box-shaped cover made of plastic (e.g., a non-conductor). With this configuration, a range over which the discharge of static electricity from the attachment member will adversely affect the control circuit of the wiring board becomes smaller. Therefore, it is possible to reduce the size of the prohibited region in which no control circuit is provided to the wiring board, which is advantageous to board design. Also, the attachment member is fixed merely by inserting the attachment member into the support frame. Thus, even when the attachment member is mounted at four places on the rear cabinet, a situation in which the assembly work is made more difficult by the work of fastening screws can be avoided.

However, it has also been discovered that the above-mentioned conventional structure requires two steps in assembly, namely, a step of tightly press-fitting the attachment member into the support frame, and a step of covering the support frame into which the attachment member has been inserted with the box-shaped cover. Therefore, it is difficult to remove the attachment member. Also, the support frame has to be formed on the rear cabinet, and forming the box-shaped cover also entails extra work.

An improved cabinet structure assembly was conceived in light of the above-mentioned problem. One object of the present disclosure is to provide a cabinet structure assembly with which assembly work becomes easier and the assembly process entails a single step.

In accordance with one aspect of the present disclosure, a cabinet structure assembly includes a cabinet, an attachment cover and an attachment member. The cabinet includes a wall with an inner face. The attachment cover is disposed on the inner face of the cabinet. The attachment cover includes a top wall portion that faces the inner face of the cabinet and a side wall portion that extends between the inner face of the cabinet and the top wall portion. The top wall portion has an engagement recess. The attachment member is detachably disposed within the attachment cover for installation through an access opening of the attachment cover. The attachment member has a base plate and a top plate that is arranged relative to the base plate. The base plate has a threaded hole that is aligned with a through-hole of the inner face of the cabinet. The top plate has a bulging portion that is engaged with the engagement recess of the top wall portion. The attachment member is compressed between the top wall portion of the attachment cover and the inner face of the cabinet such that the top plate is biased against the top wall portion of the attachment cover and the base plate is biased against the inner face of the cabinet.

With the cabinet structure assembly, it is possible to provide a cabinet structure assembly with which assembly work becomes easier and the assembly process entails a single step.

These and other objects, features, aspects and advantages will become apparent to those skilled in the art from the following detailed description, which, taken in conjunction with the annexed drawings, discloses a preferred embodiment.

### BRIEF DESCRIPTION OF THE DRAWINGS

Referring now to the attached drawings which form a part of this original disclosure:

FIG. 1 is a rear elevational view of a flat-screen television set having a mount structure in accordance with one embodiment;

FIG. 2 is a cross sectional view of the flat-screen television set taken along II-II line in FIG. 1;

FIG. 3 is an enlarged cross sectional view illustrating the mounting structure in a bounded area III of the flat-screen television set illustrated in FIG. 2, with the mounting structure having a cover and an attachment member disposed within the cover;

FIG. 4 is a partial perspective view of the cover of the mount structure illustrated in FIG. 3;

FIG. 5 is a perspective view of the attachment member of the mount structure illustrated in FIG. 3;

FIG. 6 is a cross sectional view of the mount structure illustrated in FIG. 3, illustrating that the attachment member is inserted into the cover during an assembly procedure of the mount structure;

FIG. 7 is a cross sectional view of the mount structure illustrated in FIG. 3, illustrating that the assembly procedure of the mount structure is completed and the attachment member is fitted to the cover;

FIG. 8 is a cross sectional view of the mounting structure taken along VIII-VIII line in FIG. 3; and

FIG. 9 is a schematic diagram illustrating radiation regions of static electricity from the attachment member.

### DETAILED DESCRIPTION OF EMBODIMENTS

A preferred embodiment will now be explained with reference to the drawings. It will be apparent to those skilled in the art from these disclosures that the following descriptions of the embodiment are provided for illustration only and not for the purpose of limiting the invention as defined by the appended claims and their equivalents.

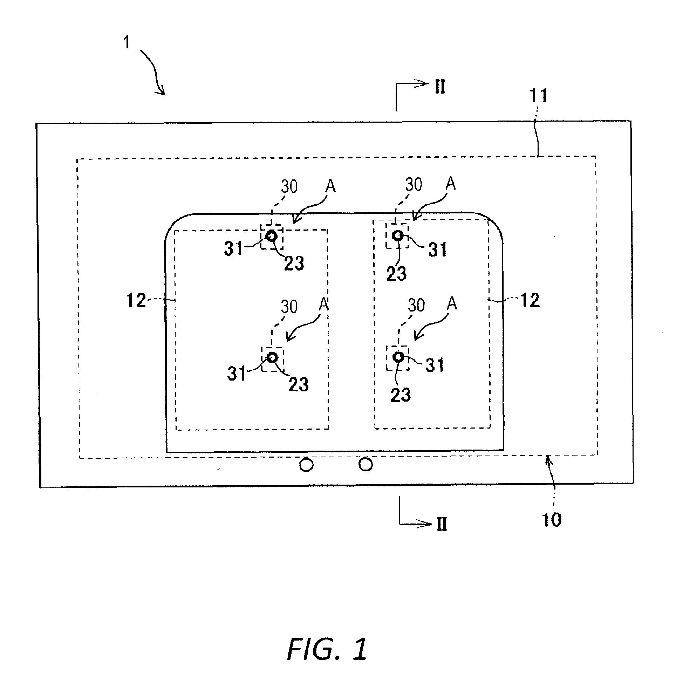

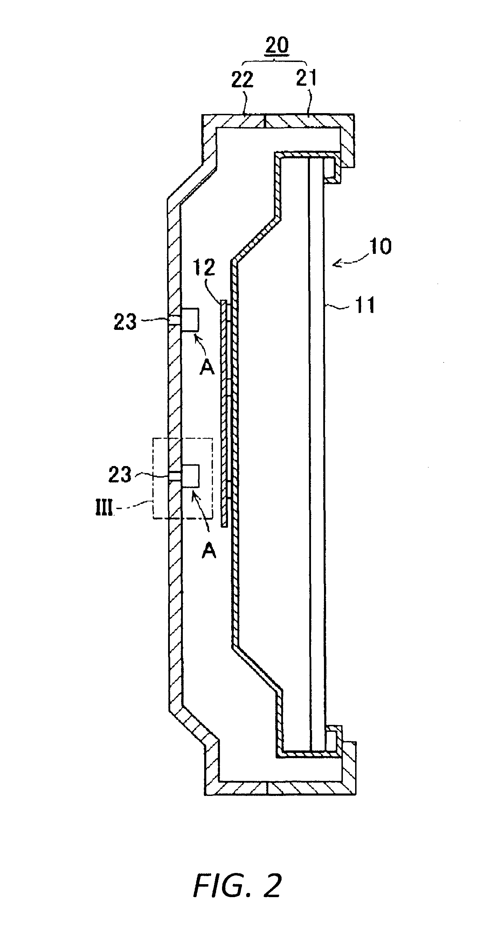

Referring to FIGS. 1 to 9, a flat-screen television set 1 having a plurality of mount structures A (e.g., cabinet structure assembly) in accordance with one embodiment will be described. As illustrated in FIGS. 1 and 2, the flat-screen television set 1 includes a liquid crystal module 10 with a liquid crystal panel 11 and a wiring board 12, a cabinet 20 and a plurality of (four in FIG. 1) attachment members 30. The liquid crystal module 10 is housed within the cabinet 20. Specifically, the liquid crystal panel 1 1 and the wiring board 12 are disposed within the cabinet 20. The cabinet 20 has a front cabinet 21 and a rear cabinet 22 with a plurality of (four in FIG. 1) circular openings 23 (e.g., through-hole). The front and rear cabinets 21 and 22 define an inside of the cabinet 20 therebetween. The attachment members 30 are provided at four places in a middle part of a wall of the rear cabinet 22. The mount structures A are provided for detachably mounting the attachment members 30 to the rear cabinet 22. In this embodiment, the mount structures A is applied to the flat-screen television set 1. However, the mount structure A can also be applied to other image display devices that can be hung on a wall.

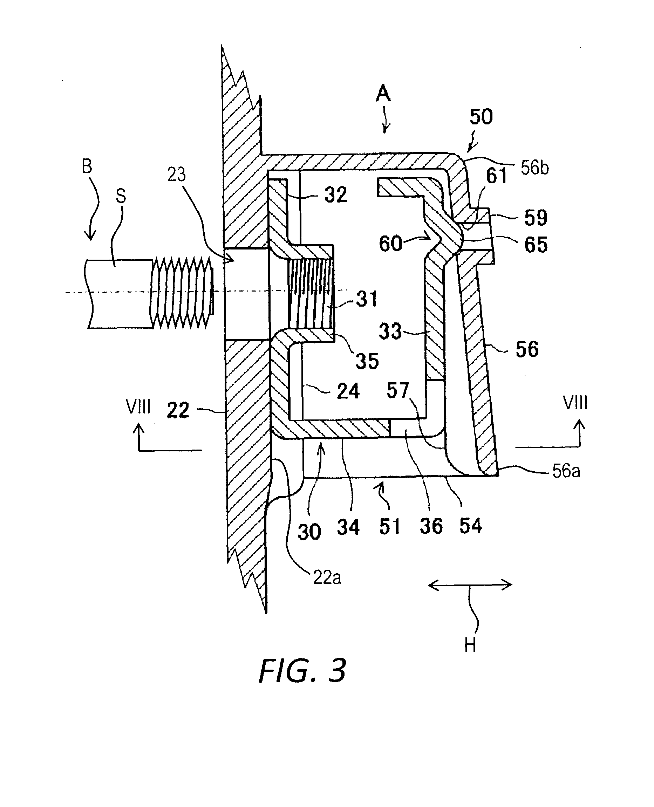

As illustrated in FIG. 3, each of the attachment members 30 has a threaded hole 31. The attachment members 30 are made of sheet metal. The attachment members 30 are mounted to the rear cabinet 22 such that the threaded holes 31 are aligned with the circular openings 23 of the rear cabinet 22, respectively. The attachment members 30 are couple to wall brackets B with fasteners, such as screws S. The wall brackets B are fixedly coupled to a wall. The fasteners are threaded into the threaded holes 31 of the attachment members 30, respectively. As illustrated in FIGS. 1 and 2, the attachment members 30 are positioned opposite the wiring board 12 of the liquid crystal module 10, respectively. The rear cabinet 22 further includes a plurality of (four in this embodiment) covers 50 (e.g., attachment cover). The attachment members 30 are disposed within the covers 50, respectively. In particular, each of the attachment members 30 is entirely covered by a corresponding one of the covers 50. The covers 50 are made of an electrostatic shielding material, such as plastic. The covers 50 are integrally formed with the rear cabinet 22 as a one-piece, unitary member. The cabinet 20, the attachment member 30 and the cover 50 mainly form the mount structure A (e.g., cabinet structure assembly). The attachment members 30 are identical to each other. Thus, hereinafter, only one of the attachment members 30 (i.e., attachment member 30) will be described in detail. Furthermore, the covers 50 are also identical to each other. Thus, hereinafter, only one of the covers 50 (i.e., cover 50) will be described in detail.

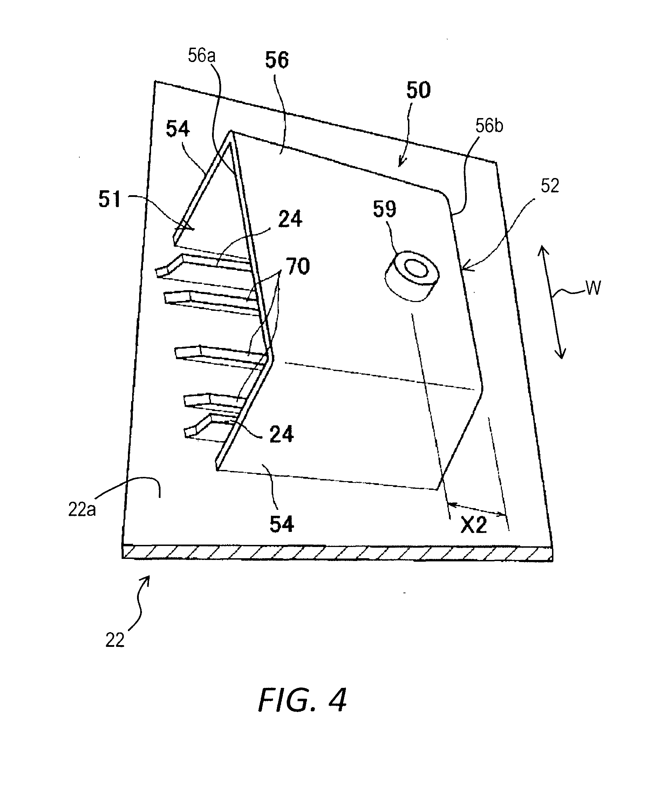

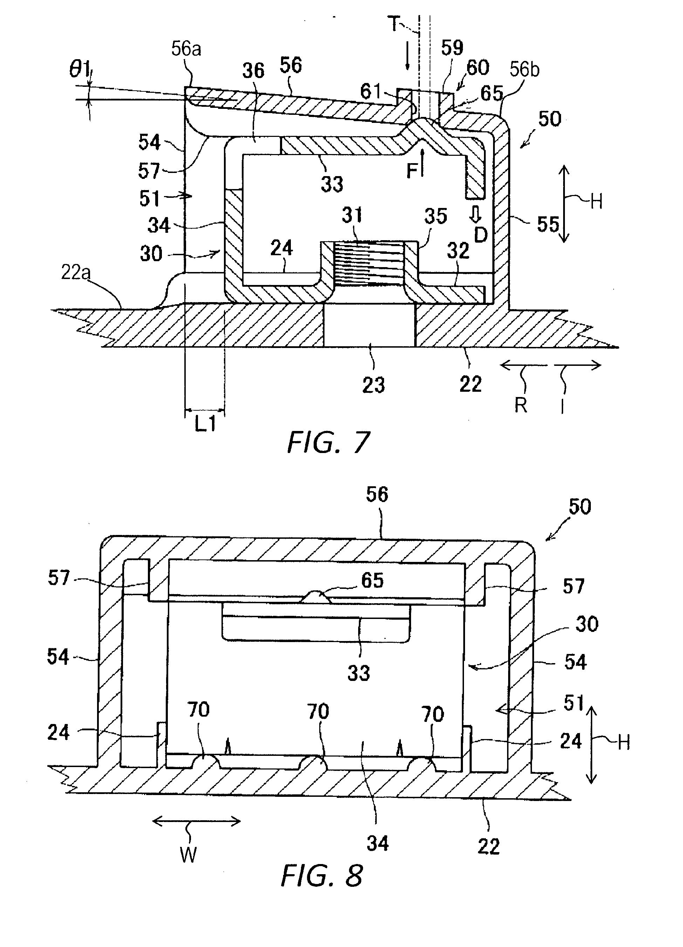

As illustrated in FIG. 4, the cover 50 is a hood-shaped enclosure. Specifically, the cover 50 includes an opening 51 (e.g., access opening) through which the attachment member 30 is inserted into and removed from the cover 50. The cover 50 further includes a side wall component 52 (e.g., side wall portion) with left and right wall portions 54 and a back side wall portion 55, and a top component 56 (e.g., top wall portion). The opening 51 is formed at one place of the side wall component 52. Specifically, the opening 51 is disposed opposite the back side wall portion 55. The left and right wall portions 54 and the back side wall portion 55 are linked in a U-shape. The side wall component 52 extends substantially vertically on an inner face 22a of the rear cabinet 22 between the inner face 22a of the rear cabinet 22 and the top component 56. The top component 56 has an inside face that faces the inner face 22a of the rear cabinet 22. As illustrated in FIG. 7, the top component 56 is sloped so as to have a gradient θ1 1 that rises toward the opening 51 in the cover 50. Specifically, the top component 56 is sloped relative to the inner face 22a of the rear cabinet 22 such that a spacing between the rear cabinet 22 and the top component 56 measured in a height direction H (e.g., first direction) of the cover 50 gradually increases as moving closer to the place where the opening 51 is formed from a place near the back side wall portion 55, and becomes greatest at the place where the opening 51 is formed. In other words, the spacing between the inner face 22a of the rear cabinet 22 and the inside face of the top component 56 decreases as approaching from a first edge portion 56a of the top component 56 to a second edge portion 56b of the top component 56. The first edge portion 56a forms an edge of the opening 51 of the cover 50. The second edge portion 56b is opposite the first edge portion 56a. Furthermore, the height direction H of the cover 50 is perpendicular to the inner face 22a of the rear cabinet 22. The top component 56 further has a recess 61 (e.g., engagement recess) with a through-hole in a middle part of the top component 56 in a widthwise direction W of the cover 50. Specifically, the top component 56 has a tubular part 59 that protrudes away from the inner face 22a of the rear cabinet 22. The tubular part 59 has a cylindrical inner face 59a forming the through-hole of the recess 61. The cylindrical inner face 59a of the tubular part 59 extends through the top component 56. The widthwise direction W of the cover 50 being perpendicular to the height direction H of the cover 50. The widthwise direction W of the cover 50 extends along the first edge portion of the top component 56 that forms an edge of the opening 51 of the cover 50. Moreover, hereinafter, a direction perpendicular to both the widthwise direction W and the height direction H is defined as a depth direction of the cover 50. Specifically, a direction from the first edge portion 56a to the second edge portion 56b along the depth direction is defined as an insertion direction I of the cover 50, and a direction opposite the insertion direction I is defined as a removal direction R of the cover 50.

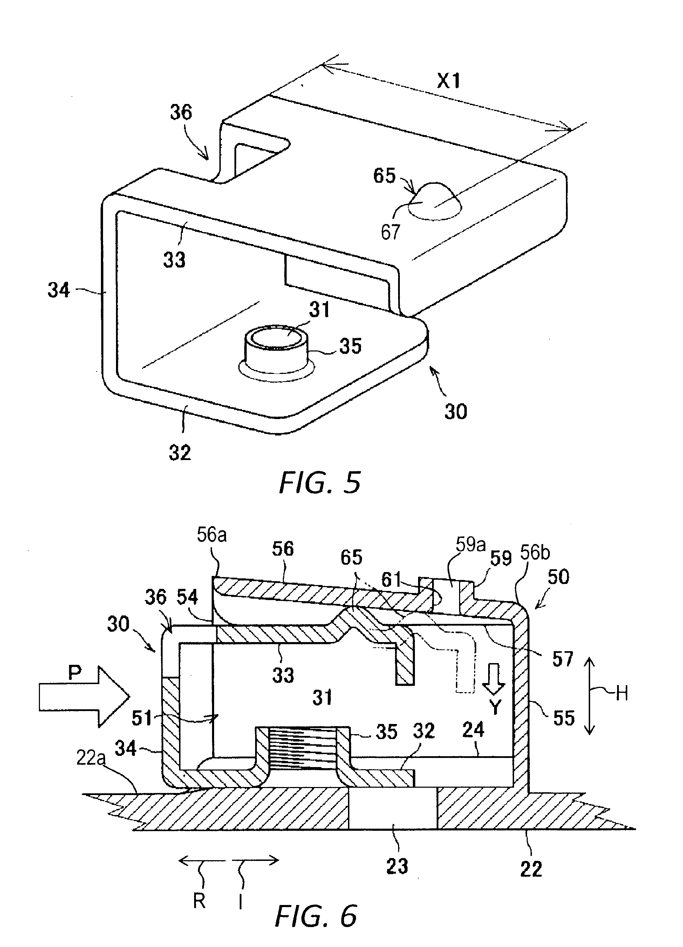

As shown in FIG. 5, the attachment member 30 is formed in a U-shape in side view. The attachment member 30 has a base piece 32 (e.g., base plate), a plate piece 33 (e.g., top plate) and a middle piece 34 (e.g., middle plate). The plate piece 33 is arranged relative to the base piece 32. Specifically, the plate piece 33 is opposite the base piece 32 with a specific distance therebetween. The middle piece 34 extends between back end portions of the base piece 32 and the plate piece 33 such that the middle piece 34 links the back end portions of the base piece 32 and the plate piece 33. The base piece 32 further has a short, boss-shaped tubular part 35. The tubular part 35 protrudes towards an inside of the attachment member 30 defined between the base piece 32 and the plate piece 33. In other words, the tubular part 35 protrudes towards the plate piece 33. The tubular part 35 is formed by burring of the base piece 32. The threaded hole 31 is formed by cutting threads in an inner peripheral face of the tubular part 35. The plate piece 33 has a protrusion 65 (e.g., bulging portion). The protrusion 65 is formed by cutting and lifting in a middle part of the plate piece 33 in a widthwise direction of the attachment member that is parallel to the widthwise direction W of the cover 50 when the attachment member 30 is disposed within the cover 50. This protrusion 65 has a peaked or conical shape. The angle of inclination of an outer conical peripheral face 67 (e.g., guide face) of the conical protrusion 65 can be set to 45 degrees with respect to a surface of the plate piece 33, for example. The conical peripheral face 67 of the protrusion 65 engages with the cylindrical inner face of the recess 61.

The protrusion 65 on the attachment member 30 and the recess 61 on the cover 50 form an engagement mechanism 60 that prevents the attachment member 30 from coming out of the opening 51 once inserted into the cover 50 through the opening 51 (see FIGS. 3 and 7). The size of the protrusion 65 is set such that when the protrusion 65 is fitted into the recess 61, the protrusion 65 is engaged with and pressed against a circumferential edge of the recess 61 by the elastic recovery force (illustrated as an arrow F in FIG. 7) of the plate piece 33, and the attachment member 30 is elastically sandwiched between the rear cabinet 22 and the top component 56 of the cover 50 by this reaction force. Specifically, the attachment member 30 is compressed between the top component 56 and the inner face 22a of the rear cabinet 20 such that the plate piece 33 of the attachment member 30 is biased against the top component 56 of the cover 50 and the base piece is biased against the inner face 22a of the rear cabinet 22.

In the course of assembling the mount structure A, the attachment member 30 is inserted into the cover 50. Specifically, the protrusion 65 on the attachment member 30 slides on the top component 56 of the cover 50, which elastically deforms the plate piece 33 of the attachment member 30. In other words, the attachment member 30 is gradually compressed between the top component 56 of the cover 50 and the inner face 22a of the rear cabinet 22 when the protrusion 65 of the attachment member 30 slides along the top component 56 of the cover 50 during the attachment of the attachment member 30 relative to the cover 50. With this arrangement, a situation that the top component 56 of the cover 50 will bend and crack or break can be prevented while the attachment member 30 is inserted into or removed from the cover 50. Furthermore, to make sure that the above-mentioned situation is further prevented, as shown in FIG. 5, the protrusion 65 of the attachment member 30 is formed at a location near a front end portion (e.g., second end portion) of the plate piece 33 such that a spacing X 1 between the protrusion 65 and the back end portion (e.g., first end portion) of the plate piece 33 is made as long as possible. In other words, the protrusion 65 is disposed farther from the back end portion of the plate piece 33 than the front end portion of the plate piece 33. The front end portion is opposite the back end portion. The front end portion forms a free end of the plate piece 33. Furthermore, the attachment member 30 further has an opening 36 (e.g., aperttire). The opening 36 is formed on the plate piece 33 and the middle piece 34 such that the opening 36 extends between the plate piece 33 and the middle piece 34 across a corner formed by the plate piece 33 and the middle piece 34. Also, as shown in FIG. 4, the recess 61 on the cover 50 at the place where the tubular part 59 is formed is disposed as close as possible to the second edge portion 56b of the top component 56 such that a spacing X2 between the recess 61 and the second edge portion 56b of the top component 56 is made as short as possible. In other words the recess 61 is disposed farther from the first edge portion 56a than the second edge portion 56b. Furthermore, the sheet metal attachment member 30 also has the opening 36. With these arrangements, when the plate piece 33 is deformed, the distance (corresponding to the spacing X1) from the fulcrum (the back end portion of the plate piece 33) to the action point (the place where the protrusion 65 is formed) can be set longer. As a result, the plate piece 33 can easily be elastically deformed.

Next, an assembly procedure for attaching the attachment member 30 to the cover 50 will be described in detail through reference to FIGS. 6 and 7.

At a first stage of this procedure, as shown in FIG. 6, the base piece 32 of the attachment member 30 is oriented toward the inner face 22a of the rear cabinet 22. The plate piece 33 is oriented toward the top component 56 of the cover 50. The front end portion of the attachment member 30 is inserted into the opening 51 of the cover 50 as shown in FIG. 6. The insertion work here can be easily carried out, with no skill required, since the top component 56 of the cover 50 is sloped so as to have the gradient θ1 that rises toward the opening 51 (see FIG. 7), and the opening 51 is sufficiently large relative to the attachment member 30.

At the next stage, the middle piece 34 of the attachment member 30 is pushed with a finger or the like, which pushes the attachment member 30 into the interior of the cover 50 as shown by an arrow P in FIG. 6 along the insertion direction I of the cover 50. This pushing slides the base piece 32 of the attachment member 30 over the inner face 22a of the rear cabinet 22. As a result, the protrusion 65 of the attachment member 30 slides on the inside face of the top component 56 of the cover 50, and the plate piece 33 of the attachment member is elastically deformed towards the inner face 22a of the rear cabinet 22 (as indicated by an arrow Y) while the protrusion 65 is guided to the recess 61 of the top component 56. Accordingly, the plate piece 33 is displaced in a return direction by its elasticity, and the protrusion 65 comes into contact with the edge of the recess 61 in an elastically pressing state as shown in FIG. 7. Therefore, the attachment member 30 is elastically sandwiched between the rear cabinet 22 and the top component 56 of the cover 50 by the reaction force created when the protrusion 65 guided into the recess 61 presses elastically on the edge of the recess 61. As a result, the attachment member 30 is mounted so that it will not move relative to the rear cabinet 22 via the cover 50.

As described above, the assembly procedure of the attachment member 30 to the rear cabinet 22 can be finished in a single step of inserting the attachment member 30 into the cover 50. Accordingly, there is no need to use a separate attachment screw or to use a separate box-shaped cover as in the conventional structures. Accordingly, the number of parts required can be correspondingly reduced, and the assembly procedure is also simplified.

As shown in FIG. 7, when the attachment member 30 has been mounted to the rear cabinet 22, even if the attachment member 30 should rattle inside the cover 50, or the attachment member 30 should be pulled in a direction of coming loose from the opening 51 along the removal direction R, since the protrusion 65 engages with the edge of the recess 61, it is unlikely that the attachment member 30 will come loose from the cover 50. In other words, the action of the engagement mechanism 60 formed by the recess 61 and the protrusion 65 reliably prevents the attachment member 30 from coming out of the cover 50.

When the attachment member 30 is removed from the cover 50, a screwdriver or some other rod-shaped tool T or the like, indicated by an imaginary line in FIG. 7, for example, is inserted into the recess 61 (e.g., through-hole). The tool T is used to press the protrusion 65 and elastically bend the plate piece 33 toward the rear cabinet 22 as indicated by an arrow D, thereby disengaging the protrusion 65 and the recess 61. When this is done, the engaged state of the engagement mechanism 60 is released, which allows the attachment member 30 to be removed from the cover 50.

As shown in FIG. 4, a pair of positioning ribs 24 is provided on the inner face 22a of the rear cabinet 22 inside the cover 50. As shown in FIG. 8, the positioning ribs 24 serve to restrict the position of the attachment member 30 in the width direction W of the cover 50 when the attachment member 30 is inserted into the cover 50. Specifically, the positioning ribs 24 sandwiches the attachment member 30 therebetween. Furthermore, the top component 56 of the cover 50 includes a pair of positioning ribs 57 that have a similar action to the positioning ribs 24. Specifically, the positioning ribs 57 sandwiches the attachment member 30 therebetween.

In the embodiment described above, static electricity released from the attachment member 30 is confined by the electrostatic shielding function of the cover 50 that covers substantially the entire attachment member 30. However, static electricity released from the portion not covered by the cover 50, namely, the middle piece 34 of the attachment member 30 across from the opening 51 of the cover 50, or the protrusion 65 of the attachment member 30 fitted into the recess 61 (e.g., through-hole) of the cover 50, will be released to the outside of the cover 50 without being blocked by the cover 50. Accordingly, it is preferable to employ some means for reducing as much as possible the size of the prohibited region where no control circuit is provided to the wiring board 12 (see FIG. 2) by minimizing the amount of static electricity released from the opening 51 or the recess 61. Beneficial ways to achieve this will now be described.

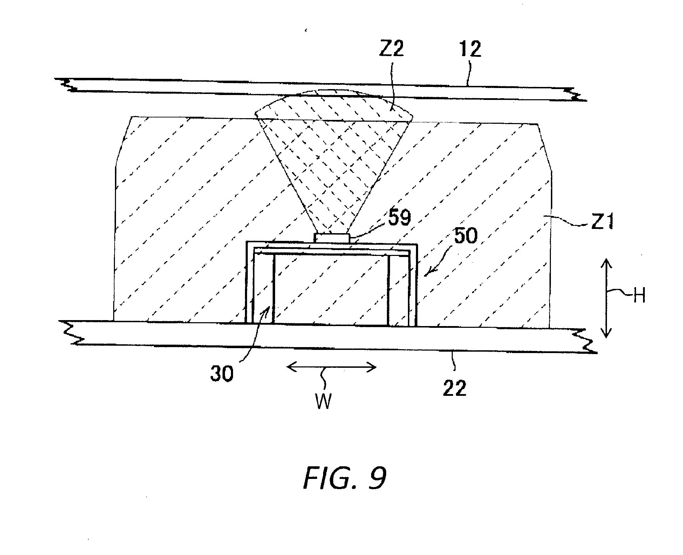

As shown in FIGS. 3 and 7, with the mount structure A, the enclosure that forms the cover 50 is extended in the removal direction R of the cover 50 to a position rearward of the attachment member 30 that has been inserted into the cover 50. As shown in FIG. 7, the cover 50 sticks out from the middle piece 34 of the attachment member 30 by a distance L1 in the removal direction R. In other words, the opening 51 has a peripheral edge that is disposed in the removal direction R of the cover 50 relative to the back end portion of the plate piece 33. The back end portion of the plate piece 33 is located in the removal direction R of the cover 50 relative to the front end portion of the plate piece 33. When the cover 50 sticks out rearward of the mount structure A relative to the middle piece 34 of the attachment member 30, the opening 51 of the cover 50 will be positioned more to the rear than the middle piece 34 at the back end portion of the attachment member 30. Thus, a radiation region Z1 of static electricity around the middle piece 34 of the attachment member 30 will be limited by the top component 56 and the left and right wall portions 54 of the cover 50. Therefore, the radiation region Z1 is reduced to just the range corresponding the distance L1. Specifically, as illustrated in FIG. 9, the radiation region Z1 in an up and down direction (e.g., height direction H of the cover 50) and a left and right direction (e.g., widthwise direction W of the cover 50) of static electricity can be reduced by the cover 50.

Furthermore, the recess 61 of the cover 50 is formed by a through-hole formed in the top component 56. Thus, a radiation region Z2 of static electricity released from the place where the protrusion 65 of the attachment member 30 is formed will be a range corresponding to an opening width of the recess 61 (e.g., diameter of the through-hole). In view of this, as mainly shown in FIG. 4, the plastic tubular part 59 faces outward and is contiguously provided to the edge of the through-hole forming the recess 61 of the top component 56 of the cover 50. This serves to reduce the size of the radiation region Z2 of static electricity released from the recess 61 by the tubular part 59. Specifically, as illustrated in FIG. 9, the radiation region Z2 of static electricity in the forward and backward direction (e.g., widthwise direction W and depth direction of the cover 50) is confined by the tubular part 59. Instead of providing the tubular part 59, it is also possible to seal off the recess 61 with plastic. In this case, a complicated mold will be needed to form the recess 61 by integrally molding the cover 50 from plastic along with the rear cabinet 22. This drives up the molding cost. However, higher static electricity shielding property can be obtained.

As mainly shown in FIGS. 4 and 8, dimensional adjustment of the attachment member 30 and the cover 50 is performed by providing a plurality of ribs 70 that are short in height on the inner face 22a of the rear cabinet 22. The ribs 70 extend parallel to the ribs 24 in the depth direction of the cover 50. In this embodiment, the mount structure A is applied to a flat-screen television set, but can also be applied to other kinds of image display device.

With the mount structure A, it is possible to provide a mount structure for the wall bracket attachment member 30 with which assembly work becomes easier than in the conventional structures and the assembly process entails a single step. Furthermore, the attachment member 30, once assembled, can be easily removed. Furthermore, there is no need for the separate formation of a box-shaped cover as in the conventional structures. Thus, so the assembly procedure is simplified and fewer parts are required. Moreover, despite this, it is possible to reduce the size of the prohibited region in which there is no control circuit on the wiring board 12.

With the mount structure A, the attachment member 30 is made of sheet metal and is coupled to the wall bracket B. The attachment member 30 is mounted to the plastic cabinet 20 at a position opposite the wiring board 12 that is provided on the inside of this cabinet 20. The threaded hole 31 is provided to the attachment member 30. The threaded hole 31 faces the opening 23 of the cabinet 20. The attachment member 30 is covered with the cover 50 that has an electrostatic shielding function and is molded from plastic integrally with the cabinet 20.

The cover 50 is a hood-shaped enclosure that has the side wall component 52 and the top component 56. The cover 50 has the opening 51 that allows the attachment member 30 to be passed through. The opening 51 is formed at one location of the side wall component 52. There is provided the engagement mechanism 60 that prevents the attachment member 30 that has been inserted through the opening 51 and into the cover 50 from coming out of the opening 51. This engagement mechanism 60 has the recess 61 provided in the top component 56 of the cover 50 and the protrusion 65 that is serrated in side view and is provided to the attachment member 30. The protrusion 65 engages with this recess 61.

Also, the protrusion 65 is formed by bulging out one part of the plate piece 33 of the attachment member 30 in a peaked shape. In the course of inserting the attachment member 30 into the cover 50, the protrusion 65 slides on the top component 56 of the cover 50 and is guided to the recess 61 while elastically deforming the plate piece 33. The attachment member 30 is elastically sandwiched between the cabinet 20 and the top component 56 of the cover 50 by the reaction force created when the protrusion 65 guided into the recess 61 elastically presses on the edge of the recess 61.

With this mount structure A, the threaded hole 31 is provided to the attachment member 30. The threaded hole 31 is utilized to screw a wall bracket B to the attachment member 30 with an integrated attachment bolt or with an attachment bolt that is separate from the wall bracket B. Also, the attachment member 30 is made of sheet metal, and is covered with the cover 50 that has an electrostatic shielding function. Thus, the spacing between the attachment member 30 and the wiring board 12 can be shorter. As a result, a television set or other such image display device equipped with this mount structure A can be made thinner.

With this mount structure A, the engagement mechanism 60 prevents the attachment member 30 from coming out of the opening 51 once it has been inserted through this opening 51 into the cover 50. Thus, this mount structure A can be easily assembled in a single step of inserting the attachment member 30 into the cover 50 that is molded from resin and integrally with the cabinet 20. In particular, the engagement mechanism 60 is formed by the peaked protrusion 65 of the plate piece 33 of the attachment member 30 and the recess 61 of the top component 56 of the cover 50. The arrangement takes advantage of the bending characteristics of the attachment member 30, in which this protrusion 65 is guided to the recess 61 while sliding on the top component 56 of the cover 50 and elastically deforming the plate piece 33 of the attachment member 30 in the step of inserting the attachment member 30 into the cover 50. Accordingly, this mount structure A can be assembled merely by performing a job that requires no special skill, such as inserting the attachment member 30 into the cover 50. Furthermore, the attachment member 30 is elastically sandwiched between the cabinet 20 and the top component 56 of the cover 50 by the reaction force created when the protrusion 65 guided into the recess 61 elastically presses on the edge of the recess 61.

Also, when the attachment member 30 is to be removed form the cover 50 after the attachment member 30 has been inserted, the protrusion 65 elastically bends and deforms the plate piece 33 and comes out of the edge of the recess 61 merely by pulling strongly on the attachment member 30 in the removal direction R of the cover 50. Thus, the attachment member 30 can be easily removed from the cover 50. Furthermore, the engagement mechanism 60 is formed by the recess 61 on the cover 50 and the peaked protrusion 65 on the attachment member 30. Thus, there is no need for a separate attachment screw as in the conventional structure as a means for mounting the cover 50 to the cabinet 20. Nor is there any need for a separate box-shaped cover as in the conventional structure.

With the mount structure A, the attachment member 30 is preferably formed in a U-shape in side view (e.g., as viewed in the widthwise direction). Specifically, the attachment member 30 has the base piece 32 that has the threaded hole 31, the plate piece 33 that is opposite this base piece 32, and the middle piece 34 that links the back end portions of the base piece 32 and the plate piece 33. Furthermore, the cover 50 has the recess 61 in the top component 56. The top component 56 is sloped so as to have the gradient θ1 rising toward the opening 51 with respect to the inner face 22a of the cabinet 20. With this arrangement, the attachment member 30 is formed in a simple shape (i.e., U shape in side view). Thus, the attachment member 30 can be produced easily. Also, the top component 56 of the cover 50 is sloped so as to have the gradient θ1 1 rising toward the opening51. Thus, another advantage is that the attachment member 30 can be easily inserted through the opening 51 into the interior of the cover 50.

With the mount structure A, it is preferable that the recess 61 is formed at a place near the first edge portion 56a (e.g., front end) of the top component 56 of the cover 50, and that the protrusion 65 is formed at a place near the front end portion of the plate piece 33 of the attachment member 30. With this arrangement, in the step of inserting the attachment member 30 into the cover 50, the plate piece 33 elastically deforms more readily than the top component 56 of the cover 50. Thus, even though the strength of the sheet metal attachment member 30 is greater than the strength of the plastic cover 50, the plate piece 33 of the attachment member 30 will elastically deform more readily than the top component 56 of the cover 50. Also, since the plastic cover 50 is made more resistant to bending deformation by imparting bending deformability to the sheet metal attachment member 30, there is less risk of damage to the top component 56 of the cover 50 when the attachment member 30 is being inserted or removed.

With the mount structure A, it is preferable that the recess 61 includes a circular through-hole formed in the top component 56 of the cover 50, and that the protrusion 65 has a conical shape. The shape of the protrusion 65 can be a peaked shape that extends in a direction that traverses the plate piece 33 of the attachment member 30. However, the protrusion 65 is formed in a conical shape as illustrated in FIG. 5. Thus, it will be easier for the protrusion 65 to fit into the recess 61, which has a circular through-hole. Furthermore, positioning of the attachment member 30 relative to the cover 50 will be more reliable in the width direction W and the depth direction of the cover 50 in the fitted state.

With the mount structure A, it is possible to reduce the size of the prohibited region in which there is no control circuit on the wiring board 12 even if the spacing between the wiring board 12 and the attachment member 30 is shortened, because the sheet metal attachment member 30 is covered with the cover 50 that has an electrostatic shielding function. On the other hand, the cover 50 has the opening 51 on its side wall component 52. Thus, the electrostatic shielding function provided by the cover 50 is lost at the place where this opening 51 is formed.

To improve this point and reduce the size of the prohibited region of the wiring board 12, with the mount structure A, the enclosure forming the cover 50 extends to a position rearward of the attachment member 30 when the attachment member 30 has been inserted into the cover 50. With this arrangement, it will be possible to reduce the size of the radiation region Z1 over which static electricity discharges from the opening 51 in the cover 50. Thus, the prohibited region of the wiring board 12 can be reduced in size correspondingly. Similarly, in view of reducing the size of the prohibited region of the wiring board 12, the tubular part 59 extending to the outside of the cover 50 is contiguous with the edge of the through-hole of the recess 61.

As discussed above, with the mount structure A, assembly work can be easier, and the assembly procedure can be completed in a single step of merely inserting the attachment member 30 into the cover 50 through the opening 51. Furthermore, there is no need to screw down the attachment member 30, nor is it necessary to use a separate box-shaped cover to cover the attachment member 10. Thus, the assembly process is correspondingly simplified and fewer parts are required. Also, the attachment member 30 that has been attached to the cover 50 can be easily removed. Furthermore, the sheet metal attachment member 30 is covered by the cover 50 provided to the cabinet 20. Thus, it is possible to reduce the size of the prohibited region in which there is no control circuit on the wiring board 12.

### GENERAL INTERPRETATION OF TERMS

In understanding the scope of the present invention, the term "comprising" and its derivatives, as used herein, are intended to be open ended terms that specify the presence of the stated features, elements, components and groups, but do not exclude the presence of other unstated features, elements, components and groups. The foregoing also applies to words having similar meanings such as the terms, "including", "having" and their derivatives. Also, the terms "part," "section," "portion," "member" or "element" when used in the singular can have the dual meaning of a single part or a plurality of parts.

While a preferred embodiment has been chosen to illustrate the present invention, it will be apparent to those skilled in the art from these disclosures that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims.

## Claims

1. A cabinet structure assembly comprising:
a cabinet (20) including a wall with an inner face (22a); and
an attachment member (30) having a base plate (32) having a threaded hole (31) that is aligned with a through-hole (23) of the inner face (22a) of the cabinet (20), and
an attachment cover (50) being disposed on the inner face (22a) of the cabinet (20), the attachment cover (50) including a top wall portion (56) that faces the inner face (22a) of the cabinet (20) and a side wall portion (52, 54, 55) that extends between the inner face (22a) of the cabinet (20) and the top wall portion (56), the top wall portion (56) having an engagement recess (61); wherein
the attachment member (30) is detachably disposed within the attachment cover (50) for installation through an access opening (51) of the attachment cover (50), the attachment member (30) having a top plate (33) that is arranged relative to the base plate (32), the top plate (33) having a bulging portion (65) that is engaged with the engagement recess (61) of the top wall portion (56), the attachment member (30) being compressed between the top wall portion (56) of the attachment cover (50) and the inner face (22a) of the cabinet (20) such that the top plate (33) is biased against the top wall portion (56) of the attachment cover (50) and the base plate (32) is biased against the inner face (22a) of the cabinet (20).

2. The cabinet structure assembly according to Claim 1, further comprising
a fastener (S) configured to couple the attachment member (30) to a wall bracket (B), the fastener (S) being configured to be threaded into the threaded hole (31) of the base plate (32).

3. The cabinet structure assembly according to Claim 1 or claim 2, wherein
the attachment member (30) is made of sheet metal.

4. The cabinet structure assembly according to any of Claims 1 to 3, wherein
the attachment cover (50) is made of an electrostatic shielding material, the attachment cover (50) and the cabinet (20) being integrally formed as a one-piece unitary member.

5. The cabinet structure assembly according to any of Claims 1 to 4, wherein
the attachment member (30) is configured to be positioned opposite a wiring board (12) that is disposed within the cabinet (20).

6. The cabinet structure assembly according to any of Claims 1 to 5, wherein
the bulging portion (65) of the attachment member (30) has a conical peripheral face that engages with a circumferential edge of the engagement recess (61) of the attachment cover (50).

7. The cabinet structure assembly according to any of Claims 1 to 6, wherein
the attachment member (30) is configured to be gradually compressed between the top wall portion (56) of the attachment cover (50) and the inner face (22a) of the cabinet (20) when the bulging portion (65) of the attachment member (30) slides along the top wall portion (56) of the attachment cover (50) during an attachment of the attachment member (30) relative to the attachment cover (50).

8. The cabinet structure assembly according to any of Claims 1 to 7, wherein
the attachment member (30) further has a middle plate (34) that extends between end portions of the base plate (32) and the top plate (33).

9. The cabinet structure assembly according to claim 8, wherein
the attachment member (30) further has an aperture (36) that extends between the top plate (33) and the middle plate (34) across a corner of the top plate (33) and the middle plate (34).

10. The cabinet structure assembly according to any of Claims 1 to 8, wherein
the top wall portion (56) of the attachment cover (50) is sloped relative to the inner face (22a) of the cabinet (20) such that a spacing between the top wall portion (56) and the inner face (22a) measured in a first direction of the attachment cover (50) that is perpendicular to the inner face (22a) of the cabinet (20) decreases as approaching from a first edge portion (56a) of the top wall portion (56) to a second edge portion (56b) of the top wall portion (56), the first edge portion (56a) forming an edge of the access opening (51) of the attachment cover (50), the second edge portion (56b) being opposite the first edge portion (56a).

11. The cabinet structure assembly according to any of Claims 1 to 10, wherein
the bulging portion (65) of the attachment member (30) is disposed farther from a first end portion of the top plate (33) than a second end portion of the top plate (33), the first end portion being opposite the second end portion, the second end portion forming a free end of the top plate (33).

12. The cabinet structure assembly according to any of Claims 1 to 11, wherein
the engagement recess (61) of the attachment cover (50) is disposed farther from a first edge portion (56a) of the top wall portion (56) than a second edge portion (56b) of the top wall portion (56), the first edge portion (56a) forming an edge of the access opening (51) of the attachment cover (50), the second edge portion (56b) being opposite the first edge portion (56a).

13. The cabinet structure assembly according to any of Claims 1 to 12, wherein
the engagement recess (61) of the attachment cover (50) has a cylindrical inner face (59a) that extends through the top wall portion (56) of the attachment cover (50), and
the bulging portion (65) of the attachment member (30) has a conical peripheral face (67) that engages with the cylindrical inner face (59a) of the engagement recess (61).

14. The cabinet structure assembly according to any of Claims 1 to 13, wherein
the access opening (51) of the attachment cover (50) has a peripheral edge that is disposed in a second direction of the cabinet (20) relative to a first end portion of the top plate (33) of the attachment member (30), the first end portion of the top plate (33) being opposite a second end portion of the top plate (33), the first end portion of the top plate (33) being located in the second direction of the cabinet (20) relative to the second end portion of the top plate. (33).

15. The cabinet structure assembly according to any of Claims 1 to 14, wherein
the top wall portion (56) of the attachment cover (50) further has a tubular part (59) that protrudes away from the inner face (22a) of the cabinet (20), the tubular part (59) having a cylindrical inner face (59a) that extends through the top wall portion (56), the cylindrical inner face (59a) of the tubular part (59) forming the engagement recess (61) of the top wall portion (56).

## Patentansprüche

1. Gehäusestrukturbaugruppe, umfassend:
ein Gehäuse (20), das eine Wand mit einer Innenfläche (22a) umfasst; und
ein Anbringungselement (30), das eine Grundplatte (32) hat, die über ein Gewindeloch (31) verfügt, das mit einem Durchgangsloch (23) der Innenfläche (22a) des Gehäuses (20) ausgerichtet ist, und
eine Anbringungsabdeckung (50), die auf der Innenfläche (22a) des Gehäuses (20) angeordnet ist, wobei die Anbringungsabdeckung (50) einen oberen Wandabschnitt (56), der der Innenfläche (22a) des Gehäuses (20) zugewandt ist, und einen Seitenwandabschnitt (52, 54, 55) umfasst, der sich zwischen der Innenfläche (22a) des Gehäuses (20) und dem oberen Wandabschnitt (56) erstreckt, wobei der obere Wandabschnitt (56) eine Eingreifausnehmung (61) hat; wobei
das Anbringungselement (30) lösbar innerhalb der Anbringungsabdeckung (50) für eine Installation durch eine Zugangsöffnung (51) der Anbringungsabdeckung (50) angeordnet ist, das Anbringungselement (30) eine obere Platte (33) hat, die in Bezug auf die Grundplatte (32) angeordnet ist, die obere Platte (33) einen Wölbungsabschnitt (65) hat, der mit der Eingreifausnehmung (61) des oberen Wandabschnittes (56) in Eingriff steht, und das Anbringungselement (30) zwischen dem oberen Wandabschnitt (56) der Anbringungsabdeckung (50) und der Innenfläche (22a) des Gehäuses (20) derart zusammengedrückt ist, dass die obere Platte (33) gegen den oberen Wandabschnitt (56) der Anbringungsabdeckung (50) vorgespannt ist und die Grundplatte (32) gegen die Innenfläche (22a) des Gehäuses (20) vorgespannt ist.

2. Gehäusestrukturbaugruppe nach Anspruch 1, weiterhin umfassend
ein Befestigungselement (S), das dazu eingerichtet ist, das Anbringungselement (30) mit einer Wandkonsole (B) zu koppeln, wobei das Befestigungselement (S) dazu eingerichtet ist, in das Gewindeloch (31) der Grundplatte (32) geschraubt zu werden.

3. Gehäusestrukturbaugruppe nach Anspruch 1 oder 2, bei der
das Anbringungselement (30) aus einem Metallblech besteht.

4. Gehäusestrukturbaugruppe nach einem der Ansprüche 1 bis 3, bei der
die Anbringungsabdeckung (50) aus einem elektrostatischen Abschirmmaterial besteht, wobei die Anbringungsabdeckung (50) und das Gehäuse (20) als einstückiges einheitliches Element integral ausgebildet sind.

5. Gehäusestrukturbaugruppe nach einem der Ansprüche 1 bis 4, bei der das Anbringungselement (30) dazu eingerichtet ist, gegenüber einer Leiterplatte (12) angeordnet zu werden, die sich in dem Gehäuse (20) befindet.

6. Gehäusestrukturbaugruppe nach einem der Ansprüche 1 bis 5, bei der
der Wölbungsabschnitt (65) des Anbringungselementes (30) eine konische Umfangsfläche hat, die mit einem Umfangsrand der Eingreifausnehmung (61) der Anbringungsabdeckung (50) in Eingriff steht.

7. Gehäusestrukturbaugruppe nach einem der Ansprüche 1 bis 6, bei der
das Anbringungselement (30) dazu eingerichtet ist, allmählich zwischen dem oberen Wandabschnitt (56) der Anbringungsabdeckung (50) und der Innenfläche (22a) des Gehäuses (20) zusammengedrückt zu werden, wenn der Wölbungsabschnitt (65) des Anbringungselementes (30) entlang des oberen Wandabschnittes (56) der Anbringungsabdeckung (50) während einer Anbringung des Anbringungselementes (30) in Bezug auf die Anbringungsabdeckung (50) gleitet.

8. Gehäusestrukturbaugruppe nach einem der Ansprüche 1 bis 7, bei der
das Anbringungselement (30) weiterhin eine Mittelplatte (34) hat, die sich zwischen Endabschnitten der Grundplatte (32) und der oberen Platte (33) erstreckt.

9. Gehäusestrukturbaugruppe nach Anspruch 8, bei der
das Anbringungselement (30) weiterhin eine Öffnung (36) hat, die sich zwischen der oberen Platte (33) und der Mittelplatte (34) über eine Ecke der oberen Platte (33) und der Mittelplatte (34) erstreckt.

10. Gehäusestrukturbaugruppe nach einem der Ansprüche 1 bis 8, bei der
der obere Wandabschnitt (56) der Anbringungsabdeckung (50) relativ zu der Innenfläche (22a) des Gehäuses (20) derart abgeschrägt ist, dass ein Zwischenraum zwischen dem oberen Wandabschnitt (56) und der Innenfläche (22a), gemessen in einer ersten Richtung der Anbringungsabdeckung (50), die senkrecht zu der Innenfläche (22a) des Gehäuses (20) ist, abnimmt, wenn er sich von einem ersten Randabschnitt (56a) des oberen Wandabschnittes (56) einem zweiten Randabschnitt (56b) des oberen Wandabschnittes (56) nähert, wobei der erste Randabschnitt (56a) einen Rand der Zugangsöffnung (51) der Anbringungsabdeckung (50) bildet und der zweite Randabschnitt (56b) dem ersten Randabschnitt (56a) gegenüberliegt.

11. Gehäusestrukturbaugruppe nach einem der Ansprüche 1 bis 10, bei der
der Wölbungsabschnitt (65) des Anbringungselementes (30) weiter von einem ersten Endabschnitt der oberen Platte (33) als ein zweiter Endabschnitt der oberen Platte (33) angeordnet ist, wobei der erste Endabschnitt dem zweiten Endabschnitt gegenüberliegt und der zweite Endabschnitt ein freies Ende der oberen Platte (33) bildet.

12. Gehäusestrukturbaugruppe nach einem der Ansprüche 1 bis 11, bei der
die Eingriffsausnehmung (61) der Anbringungsabdeckung (50) weiter von einem ersten Randabschnitt (56a) des oberen Wandabschnittes (56) angeordnet ist als ein zweiter Randabschnitt (56b) des oberen Wandabschnittes (56), wobei der erste Randabschnitt (56a) einen Rand der Zugangsöffnung (51) der Anbringungsabdeckung (50) bildet und der zweite Randabschnitt (56b) dem ersten Randabschnitt (56a) gegenüberliegt.

13. Gehäusestrukturbaugruppe nach einem der Ansprüche 1 bis 12, bei der
die Eingreifausnehmung (61) der Anbringungsabdeckung (50) eine zylindrische Innenfläche (59a) hat, die sich durch den oberen Wandabschnitt (56) der Anbringungsabdeckung (50) erstreckt, und der Wölbungsabschnitt (65) des Anbringungselementes (30) eine konische Umfangsfläche (67) hat, die mit der zylindrischen Innenfläche (59a) der Eingreifausnehmung (61) in Eingriff steht.

14. Gehäusestrukturbaugruppe nach einem der Ansprüche 1 bis 13, bei der
die Zugangsöffnung (51) der Anbringungsabdeckung (50) einen Umfangsrand hat, der in einer zweiten Richtung des Gehäuses (20) relativ zu einem ersten Endabschnitt der oberen Platte (33) des Anbringungselementes (30) angeordnet ist, wobei der erste Endabschnitt der oberen Platte (33) einem zweiten Endabschnitt der oberen Platte (33) gegenüberliegt und der erste Endabschnitt der oberen Platte (33) in der zweiten Richtung des Gehäuses (20) relativ zu dem zweiten Endabschnitt der oberen Platte (33) angeordnet ist.

15. Gehäusestrukturbaugruppe nach einem der Ansprüche 1 bis 14, bei der
der obere Wandabschnitt (56) der Anbringungsabdeckung (50) weiterhin einen röhrenförmigen Teil (59) hat, der von der Innenfläche (22a) des Gehäuses (20) hervorragt, wobei der röhrenförmige Teil (59) eine zylindrische Innenfläche (59a) hat, die durch den oberen Wandabschnitt (56) verläuft, und die zylindrische Innenfläche (59a) des röhrenförmigen Teils (59) die Eingriffsausnehmung (61) des oberen Wandabschnittes (56) bildet.

## Revendications

1. Ensemble de structure d'armoire comprenant :
une armoire (20) comprenant une paroi avec une face interne (22a) ; et
un élément de fixation (30) ayant une plaque de base (32) ayant un trou fileté (31) qui est aligné avec un trou débouchant (23) de la face interne (22a) de l'armoire (20), et
un couvercle de fixation (50) qui est disposé sur la face interne (22a) de l'armoire (20), le couvercle de fixation (50) comprenant une partie de paroi supérieure (56) qui fait face à la face interne (22a) de l'armoire (20) et une partie de paroi latérale (52, 54, 55) qui s'étend entre la face interne (22a) de l'armoire (20) et la partie de paroi supérieure (56), la partie de paroi supérieure (56) ayant un évidement de mise en prise (61) ; dans lequel :
l'élément de fixation (30) est disposé de manière détachable à l'intérieur du couvercle de fixation (50) pour l'installer à travers une ouverture d'accès (51) du couvercle de fixation (50), l'élément de fixation (30) ayant une plaque supérieure (33) qui est agencée par rapport à la plaque de base (32), la plaque supérieure (33) ayant une partie de renflement (65) qui est mise en prise avec l'évidement de mise en prise (61) de la partie de paroi supérieure (56), l'élément de fixation (30) étant comprimé entre la partie de paroi supérieure (56) du couvercle de fixation (50) et la face interne (22a) de l'armoire (20) de sorte que la plaque supérieure (33) est sollicitée contre la partie de paroi supérieure (56) du couvercle de fixation (50) et la plaque de base (32) est sollicitée contre la face interne (22a) de l'armoire (20).

2. Ensemble de structure d'armoire selon la revendication 1, comprenant en outre :
un dispositif de fixation (S) configuré pour coupler l'élément de fixation (30) à une console de paroi (B), le dispositif de fixation (S) étant configuré pour être fileté dans le trou fileté (31) de la plaque de base (32).

3. Ensemble de structure d'armoire selon la revendication 1 ou la revendication 2, dans lequel :
l'élément de fixation (30) est réalisé à partir d'un métal en feuille.

4. Ensemble de structure d'armoire selon l'une quelconque des revendications 1 à 3, dans lequel :
le couvercle de fixation (50) est réalisé avec un matériau de protection électrostatique, le couvercle de fixation (50) et l'armoire (20) étant formés de manière solidaire comme un élément unitaire d'un seul tenant.

5. Ensemble de structure d'armoire selon l'une quelconque des revendications 1 à 4, dans lequel :
l'élément de fixation (30) est configuré pour être positionné de manière opposée à un tableau de connexions (12) qui est disposé à l'intérieur de l'armoire (20).

6. Ensemble de structure d'armoire selon l'une quelconque des revendications 1 à 5, dans lequel :
la partie de renflement (65) de l'élément de fixation (30) a une face périphérique conique qui se met en prise avec un bord circonférentiel de l'évidement de mise en prise (61) du couvercle de fixation (50).

7. Ensemble de structure d'armoire selon l'une quelconque des revendications 1 à 6, dans lequel :
l'élément de fixation (30) est configuré pour être comprimé progressivement entre la partie de paroi supérieure (56) du couvercle de fixation (50) et la face interne (22a) de l'armoire (20) lorsque la partie de renflement (65) de l'élément de fixation (30) coulisse le long de la partie de paroi supérieure (56) du couvercle de fixation (50) pendant une fixation de l'élément de fixation (30) par rapport au couvercle de fixation (50).

8. Ensemble de structure d'armoire selon l'une quelconque des revendications 1 à 7, dans lequel :
l'élément de fixation (30) a en outre une plaque centrale (34) qui s'étend entre des parties d'extrémité de la plaque de base (32) et de la plaque supérieure (33).

9. Ensemble de structure d'armoire selon la revendication 8, dans lequel :
l'élément de fixation (30) a en outre un orifice (36) qui s'étend entre la plaque supérieure (33) et la plaque centrale (34) sur un coin de la plaque supérieure (33) et de la plaque centrale (34).

10. Ensemble de structure d'armoire selon l'une quelconque des revendications 1 à 8, dans lequel :
la partie de paroi supérieure (56) du couvercle de fixation (50) est inclinée par rapport à la face interne (22a) de l'armoire (20) de sorte qu'un espacement entre la partie de paroi supérieure (56) et la face interne (22a) mesurée dans une première direction du couvercle de fixation (50) qui est perpendiculaire à la face interne (22a) de l'armoire (20) diminue au fur et à mesure qu'il se rapproche d'une première partie de bord (56a) de la partie de paroi supérieure (56) à une seconde partie de bord (56b) de la partie de paroi supérieure (56), la première partie de bord (56a) formant un bord d'une ouverture d'accès (51) du couvercle de fixation (50), la seconde partie de bord (56b) étant opposée à la première partie de bord (56a).

11. Ensemble de structure d'armoire selon l'une quelconque des revendications 1 à 10, dans lequel :
la partie de renflement (65) de l'élément de fixation (30) est disposée de manière plus éloignée d'une première partie d'extrémité de la plaque supérieure (33) qu'une seconde partie d'extrémité de la plaque supérieure (33), la première partie d'extrémité étant opposée à la seconde partie d'extrémité, la seconde partie d'extrémité formant une extrémité libre de la plaque supérieure (33).

12. Ensemble de structure d'armoire selon l'une quelconque des revendications 1 à 11, dans lequel :
l'évidement de mise en prise (61) du couvercle de fixation (50) est disposé de manière plus éloignée d'une première partie de bord (56a) de la partie de paroi supérieure (56) qu'une seconde partie de bord (56b) de la partie de paroi supérieure (56), la première partie de bord (56a) formant un bord de l'ouverture d'accès (51) du couvercle de fixation (50), la seconde partie de bord (56b) étant opposée à la première partie de bord (56a).

13. Ensemble de structure d'armoire selon l'une quelconque des revendications 1 à 12, dans lequel :
l'évidement de mise en prise (61) du couvercle de fixation (50) a une face interne cylindrique (59a) qui s'étend à travers la partie de paroi supérieure (56) du couvercle de fixation (50), et
la partie de renflement (65) de l'élément de fixation (30) a une face périphérique conique (67) qui se met en prise avec la face interne cylindrique (59a) de l'évidement de mise en prise (61).

14. Ensemble de structure d'armoire selon l'une quelconque des revendications 1 à 13, dans lequel :
l'ouverture d'accès (51) du couvercle de fixation (50) à un bord périphérique qui est disposé dans une seconde direction de l'armoire (20) par rapport à une première partie d'extrémité de la plaque supérieure (33) de l'élément de fixation (30), la première partie d'extrémité de la plaque supérieure (33) étant opposée à une seconde partie d'extrémité de la plaque supérieure (33), la première partie d'extrémité de la plaque supérieure (33) étant positionnée dans la seconde direction de l'armoire (20) par rapport à la seconde partie de la plaque supérieure (33).

15. Ensemble de structure d'armoire selon l'une quelconque des revendications 1 à 14, dans lequel :
la partie de paroi supérieure (56) du couvercle de fixation (50) a en outre une partie tubulaire (59) qui fait saillie à distance de la face interne (22a) de l'armoire (20), la partie tubulaire (59) ayant une face interne cylindrique (59a) qui s'étend à travers la partie de paroi supérieure (56), la face interne cylindrique (59a) de la partie tubulaire (59) formant l'évidement de mise en prise (61) de la partie de paroi supérieure (56).
